# EUROPEAN PATENT SPECIFICATION

(11) **EP 3 866 045 B1**
(45) Date of publication and mention of the grant of the patent: **10.09.2025**
(21) Application number: 20157479.5
(22) Date of filing: 14.02.2020
(51) Int. Cl.: G06F 30/23, G06F 30/27, G06F 119/04

(54) **METHOD AND SYSTEM FOR DETERMINING THE MECHANICAL RESPONSE OF A COMPONENT**
VERFAHREN UND SYSTEM ZUR BESTIMMUNG DER MECHANISCHEN REAKTION EINES BAUTEILS
PROCÉDÉ ET SYSTÈME POUR DÉTERMINER LA RÉPONSE MÉCANIQUE D'UN COMPOSANT

(43) Date of publication of application: 18.08.2021
(73) Proprietor: Robert Bosch GmbH, 70442 Stuttgart (DE)
(72) Inventor: Kuhn, Jannick, 76137 Karlsruhe (DE); Finnie, Nicole Ying, 71034 Boeblingen (DE); Schaefer, Benjamin Josef, 73119 Zell Unter Aichelberg (DE); Wagner, Joerg, 71272 Renningen (DE); Spitz, Jonathan, 71229 Leonberg (DE)

(56) References cited:
- ALI USMAN ET AL: "Application of artificial neural networks in micromechanics for polycrystalline metals", INTERNATIONAL JOURNAL OF PLASTICITY, vol. 120, 8 May 2019 (2019-05-08), pages 205 - 219, XP085725309, ISSN: 0749-6419, DOI: 10.1016/J.IJPLAS.2019.05.001
- LAHMADI AHMED ET AL: "A data-driven method for estimating the remaining useful life of a composite drill pipe", 2018 INTERNATIONAL CONFERENCE ON ADVANCED SYSTEMS AND ELECTRIC TECHNOLOGIES (IC_ASET), IEEE, 22 March 2018 (2018-03-22), pages 192 - 195, XP033358495, DOI: 10.1109/ASET.2018.8379857
- TJIPTOWIDJOJO Y ET AL: "Microstructure-sensitive notch root analysis for dwell fatigue in Ni-base superalloys", INTERNATIONAL JOURNAL OF FATIGUE, ELSEVIER, AMSTERDAM, NL, vol. 31, no. 3, 1 March 2009 (2009-03-01), pages 515 - 525, XP025679431, ISSN: 0142-1123, [retrieved on 20080430], DOI: 10.1016/J.IJFATIGUE.2008.04.007
- FRANKEL A L ET AL: "Predicting the mechanical response of oligocrystals with deep learning", COMPUTATIONAL MATERIALS SCIENCE, ELSEVIER, AMSTERDAM, NL, vol. 169, 1 July 2019 (2019-07-01), XP085786542, ISSN: 0927-0256, [retrieved on 20190701], DOI: 10.1016/J.COMMATSCI.2019.109099
- LIU GUANGYAN ET AL: "Inverse identification of graphite damage properties under complex stress states", MATERIALS AND DESIGN, ELSEVIER, AMSTERDAM, NL, vol. 183, 20 August 2019 (2019-08-20), XP085864675, ISSN: 0264-1275, [retrieved on 20190820], DOI: 10.1016/J.MATDES.2019.108135
- PIERSON KYLE ET AL: "Predicting Microstructure-Sensitive Fatigue-Crack Path in 3D Using a Machine Learning Framework", JOM: JOURNAL OF METALS, SPRINGER NEW YORK LLC, UNITED STATES, vol. 71, no. 8, 1 July 2019 (2019-07-01), pages 2680 - 2694, XP036845280, ISSN: 1047-4838, [retrieved on 20190701], DOI: 10.1007/S11837-019-03572-Y
- ZHANG JINHU ET AL: "Recent progress in the simulation of microstructure evolution in titanium alloys", PROGRESS IN NATURAL SCIENCE, SCIENCE PRESS, BEIJING, CN, vol. 29, no. 3, 1 June 2019 (2019-06-01), pages 295 - 304, XP085782740, ISSN: 1002-0071, [retrieved on 20190724], DOI: 10.1016/J.PNSC.2019.05.006

## Description

### Technical Field

The present invention relates to the simulation of mechanical responses of a component using finite element methods. The present invention further relates to methods for determining a fatigue indicator parameter for predicting possible crack initiation in the component.

### Technical Background

Macroscale finite element methods are the standard tool for investigating a mechanical response of a component under load. Particularly, when a lifetime of a component shall be assessed under cyclic loading, microstructural aspects have to be taken into account for modelling early fatigue damage. Thereby, mesoscopic fatigue indicator parameters are required to obtain microstructural dependent fatigue response.

The mechanical response at the microscale level (i.e. regarding the microstructural aspects) is usually determined by a microstructural simulation. A common approach for a microstructural simulation is the crystal plasticity finite element method (CPFEM) which allows to simulate the microstructure-dependent behavior of a component.

A standard approach is to use an FE square approach where the material behavior of each integration point of a macroscale finite element method simulation is determined by a full field microstructural simulation. This approach is highly computationally expensive so that the practical use of the FE square approach is limited.

Prior art document XP085725309 discloses an artificial neural network model is coupled with a rate-dependant crystal plasticity finite element method formulation to predict the stress-strain behaviour and texture evolution under uniaxial tension and simple shear.

### Summary of the invention

According to the invention, the method for determining a mechanical response of a component using a mechanical simulation according to claim 1 and a system for determining the mechanical response of the component according to the further independent claim are provided.

Further embodiments are indicated in the dependent subclaims.

According to a first aspect a computer-implemented method for determining a distribution of a fatigue indicator parameter of a component after applying a load characteristics, comprising the steps of:
- Simulating the microstructural response using a macroscale simulation applying a finite element method in consecutive time steps, wherein the microstructural response is obtained in a recurrent process of concurrently determining deformation and stress for each integration point until macroscale simulation has converged to a balancing equilibrium;
- For each iteration, each time step and each integration point, applying a trained recurrent neural network based on a deformation increment to obtain the stress and fatigue indicator parameter, wherein the fatigue indication parameter is derived from an internal state of the recurrent neural network.

Moreover, the recurrent neural network may be trained based on a microstructural simulation, particularly using a crystal plasticity finite element method.

Particularly, the recurrent neural network may be trained to determine the stress and fatigue indicator parameter based on a given phase distribution and a deformation at the respective integration point.

According to the above method for determining the mechanical response of a component uses a modified method which combines the macroscale simulation applying a standard mechanical finite element method with a recurrent neural network which has been trained with results of a microstructural simulation using a crystal plasticity finite element method. Thereby, the full-field microstructural simulation, i.e. the crystal plasticity finite element method, is replaced by a recurrent neural network. As recurrent neural networks may be computed more efficiently the performance of the "microstructural simulation" to obtain the at least one micromechanical response can be accelerated while being able to predict the material behavior at each integration point of the macroscale simulation.

The efficiency advantage of using the recurrent neural network instead of a microstructural simulation allows the hybrid model to learn the change in mechanical responses over time and to predict future mechanical responses. This further allows e.g. the prediction of possible crack initiation based on the at least one predicted micromechanical response. Particularly, it is thereby possible to estimate the local hotspot for failure for the whole component using numerical simulations on the macroscopic scale combined with the recurrent neural network for the microscopic scale.

It may be provided that after simulation of microstructural responses the local distribution of the fatigue indicator parameter is used to find the maximum hot spot as a potential fatigue crack initiation location.

Furthermore, simulating the microstructural response may be performed based on a mechanical load applied on the component, a geometry of the component and material properties of the material of the component and a phase distribution.

The recurrent neural network may be trained based on microstructural simulations, particularly using a crystal plasticity finite element method.

Particularly, the recurrent neural network may be trained to determine the stress and fatigue indicator parameter based on a given phase distribution and a deformation at the respective integration point.

According to an embodiment, determining the at least one micromechanical response at each of the positions by means of the recurrent neural network may involve storing and using an internal state of the component for each of the specific positions (integration points).

Furthermore, the step of determining at least one mechanical responses by means of the recurrent neural network is performed for a number of time steps wherein an internal state of the material at a specific time step is stored and used in a succeeding time step.

Furthermore, the recurrent neural network may comprise a GRU network, an LSTM network a bidirectional neural network and/or a stacked neural network.

Furthermore, the recurrent neural network may comprise a Bayesian recurrent neural network, wherein the Bayesian recurrent neural network provides a distribution of stress and fatigue indicator parameters for each iteration, wherein the mean of the distribution of stress and fatigue indicator parameters may be used for macroscale simulation. Also some other informative quantity of the distribution can be used in the macroscale distribution (e.g. the variance to account for uncertainty).

According to a further aspect, a system for determining a distribution of a fatigue indicator parameter of a component after applying a load characteristic is performed, the system is configured to perform the steps of:
- Simulating the microstructural response using a macroscale simulation applying a finite element method in consecutive time steps, wherein the microstructural response is obtained in a recurrent process of determining deformation and stress until a convergence is achieved to obtain a balancing equilibrium;
- For each iteration, each time step and each integration point, applying a trained recurrent neural network based on a given phase distribution and deformation at the respective integration point to obtain a stress and fatigue indicator parameter in each integration point; wherein the fatigue indication parameter is derived from an internal state of the recurrent neural network.

### Brief description of the drawings

Embodiments are further described in conjunction with the accompanying drawings in which:
- Figure 1: shows a functional diagram illustrating the process for determining the mechanical behavior of a component using a simulation.
- Figure 2: shows a flowchart illustrating the method steps for performing the simulations of the mechanical behavior of the component.

### Detailed description of embodiments

The present invention is related to a computer-implemented method, which is performed on a computer having one or more microprocessors and a memory for storing the software algorithm for performing the method and for storing model data.

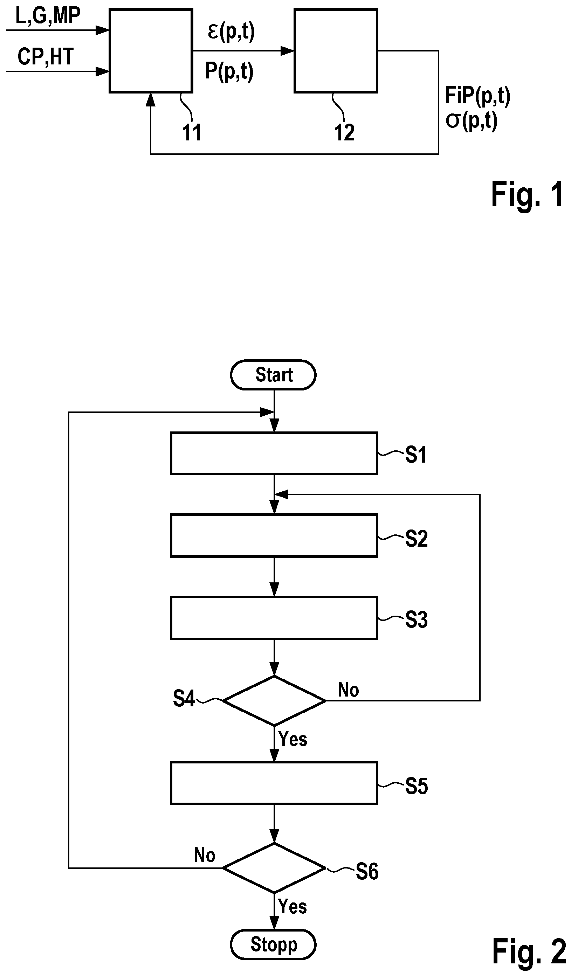

The block diagram of Figure 1 schematically illustrates the process of the determination of the mechanical response of a component. Such a component may be a mechanical device which is exposed to external load conditions, such as e.g. a rotor anchor of an electrical machine or the like.

A macroscale simulation block 11 stands for the macroscale simulation of the component in a macroscopic scale. The macroscale simulation uses a finite element method, which is performed for a given component. The macroscale simulation makes use of inputs such as an external load L, a geometry G of the component, material properties MP of the material of the component, and optionally chemical components CP and parameters HT of a heat treatment of the material of the component, which reflect the internal microstructure of the material of the component.

Basically, the macroscale simulation performs a recurrent process wherein deformation caused by the external load results in a deformation, such as a strain increment, at each integration point, i.e. position of the component. By means of a microscale simulation, which is performed for each integration point of the component, this strain (deformation) can be further developed into a local stress.

Due to the impact of local stress onto the strain (deformation), interdependencies have to be resolved by the recurrent macroscale simulation process until a convergence between strain (deformation) and stress at each of the regarded integration points of component has been found. This convergence corresponds to a balancing equilibrium.

In detail, the macroscale finite element method for the macroscale simulation further relies on micromechanical responses, which translate the strain (deformation) into stress for a given position in the component, at the respective simulated time step. Furthermore, the continuous application of stress over time results in fatigue, which might be determined by fatigue indicator parameters.

In the further process of the macroscale simulation, the micromechanical responses may be "generated" through a microscale simulation so that while iterating through the macroscale simulation process towards convergence each iteration uses for each position in the component the microscale simulation to obtain a stress increment at the corresponding integration point. By regarding the timeline of stress levels, the fatigue indicator parameter can be obtained as well.

As a result of the finite element method of the macroscale simulation, a balancing equilibrium has been achieved indicating a 3D model with deformation ε (p,t) and stress σ(p,t) at each integration point of the component at the time step t.

In the macroscale simulation a phase P(p,t) and the deformation D(p,t) of the material of the component is obtained for each of the integration points p of the finite element method at the time step t. The phase is a volume defined by the integration point throughout which all mechanical relevant properties of the material are deemed as essentially uniform.

Conventionally, the phase P(p,t) and the deformation, e.g. strain ε (p,t) are the inputs to a microstructural simulation applying a crystal plasticity finite element method (CPFEM), which is configured to compute an output distribution of the micromechanical responses, such as fatigue indicator parameters FIP and a stress σ for each local integration point p of the macroscale simulation and for a given time step t.

According to the present invention, the crystal plasticity finite element method is replaced by a trained recurrent neural network implemented in a microstructural model block 12. The recurrent neural network has been trained based on results of CPFEM simulations in that the characteristics of the fatigue indicator parameter FIP, the stress σ and the strain ε (micromechanical responses) are used for training the recurrent neural network. The recurrent neural network may be any kind of GRU, LSTM, bidirectional neural network, stacked neural network and the like, which are generally known in the art. In this context, recurrent neural networks have the ability to develop an internal state which does represent an actual condition of the component at an integration point for the current time step.

Substantially, the recurrent neural network is trained using the characteristics of the phase P and the strain ε on a specific local position (integration point) in the component over time steps and correspondingly learns the correlation between mechanical responses (such as fatigue indicator parameter FIP, the stress and the strain) in each time step.

So, the recurrent neural network can be used to infer the fatigue indicator parameter FIP and the stress σ based on the strain ε at a specific integration point p based on historical time-dependent characteristics of the phase P(p,t) and the strain ε(p,t). As known from recurrent neural networks an internal state (latent state vector) is developed. The internal state may reflect the material degradation, i.e. the accumulated mechanical load, at the simulated local position from which the fatigue indicator parameter can be derived.

The output mechanical responses such as the stress response obtained by the microstructural model block 12 are fed back to the macroscale simulation applying the recursive macroscale finite element method which in turn calculates the phase P and the strain ε until a balancing equilibrium where stress and strain at each integration point are basically corresponding to each other (are in equilibrium) has been reached.

In the flowchart of Figure 2, the process flow of the method for determining the mechanical response of a component.

In step S1, the input parameters, such as the external load L, the geometry G of the component and material properties MP, as well as initial micromechanical responses, such as a fatigue indicator parameter FIP(0) , a stress σ(0) and a strain ε(0) at an initial time step t=0 are provided.

In step S2, a macroscale simulation is performed using the macroscale finite element method based on the given input parameters as well as on the micromechanical responses of the material of the component. A macroscopic boundary value problem is solved by applying the finite element method. The macroscale simulation is a recurrent process balancing strain (deformation) and stress until a balancing equilibrium has been reached.

In each iteration of step S2, step S3 is applied. In step S3 for each integration point (local position) in the component (node of the FEM), the recurrent neural network is used to obtain a fatigue indicator parameter FIP(p,t) and a stress σ(p,t) based on a strain ε(p,t) for the considered time step t. Therefore, for the inquired integration point p of the material of the component, a phase P(p,t) and a strain ε(p,t) are supplied to an input of the recurrent neural network, together with an internal state indicated by the latent state vector, which has been determined or updated in a preceding time step t-1 for the respective position. The internal state for the current time step t develops by the characteristics of material stresses and deformations during preceding time steps t=0,...,t-1, and results from the trained weight parameters of the RNN.

For the current time step, it is thereby obtained a new value for the micromechanical responses FIP(p,t) and σ(p,t). The stress σ(p,t) for the inquired integration point p of the material of the component are fed back to the macroscale simulation applying the finite element method in every iteration. Once the balancing equilibrium has been achieved, the internal state is stored.

In step S4 it is determined if the simulation for the current time step shall be finished. The simulation may e.g. be finished after a number of simulated time steps or until the balancing equilibrium between stress and strain (deformation) at each integration point has been reached. If it is determined that the simulation shall be finished (alternative: yes) the method is continued with step S5 otherwise (alternative: no) the time step is incremented, and it is returned to step S2. Thereby, once the macroscale simulation has considered all nodes in the material of the component, a micromechanical response of a next time step can be simulated.

In steps S5 the accumulated load of the material of the component in terms of fatigue indicator parameter at each integration point in the component for a given load characteristics can be obtained. Based on the distribution of the fatigue indicator parameter weak points in the component can be determined which represent positions where a potential fatigue crack initiation will occur due to fatigue. So, it can be determined if the component satisfies lifetime requirements under predetermined load conditions.

In step S6 it is determined if the simulated component satisfies the lifetime and fatigue requirements. If it is determined that the simulated component satisfies the lifetime and fatigue requirements (micromechanical response condition) (alternative: yes) the method is halted and the last obtained material and geometry settings of the component are maintained, otherwise (alternative: no) it is returned to step S1 with changed component properties, such as a changed material, changed geometry and/or the like.

With the described method, a computationally expensive microscale simulation can be replaced by an inference of the recurrent neural network 12 so that respective micromechanical responses can be used in a macroscale simulation for each integration point of the component, each time step and in each iteration of the macroscale model.

The replacement of the crystal plasticity finite element method as a method for microstructural simulation with the recurrent neural network allows to essentially reduce the computational time for determining the micromechanical responses needed for the macroscale simulation.

## Claims

1. Computer-implemented method for determining a distribution of a fatigue indicator parameter (FIP(p,t)) of a component after applying a load characteristics, comprising the steps of:
- Simulating (S2) the microstructural response using a macroscale simulation applying a finite element method in consecutive time steps, wherein the microstructural response is obtained in a recurrent process of concurrently determining deformation (ε(p,t)) and stress (σ(p,t)) for each integration point until macroscale simulation has converged to a balancing equilibrium;
- For each iteration, each time step and each integration point, applying (S3) a trained recurrent neural network (12) based on a deformation (ε(p,t)) increment to obtain the stress (σ(p,t)) and fatigue indicator parameter (FIP(p,t)), wherein the recurrent neural network is configured to determine the stress (σ(p,t)) and fatigue indicator parameter (FIP(p,t)) based on a given phase distribution (P(p,t)) and a deformation (ε(p,t)) at the respective integration point, wherein the fatigue indication parameter (FIP(p,t)) is derived from an internal state of the recurrent neural network (12), wherein determining the stress (σ(p,t)) and fatigue indicator parameter (FIP(p,t)) at each of the integration points by means of the recurrent neural network (12) involves storing and using an internal state of the component for each of the specific positions, wherein determining at least one mechanical response by means of the recurrent neural network is performed for a number of time steps wherein an internal state of the material at a specific time step is stored and used in a succeeding time step.

2. Method according to claim 1, wherein after simulation of microstructural responses the local distribution of the fatigue indicator parameter (FIP(p,t)) is used to find the maximum hot spot as a potential fatigue crack initiation location.

3. Method according to claim 1 or 2, wherein simulating the microstructural response is performed based on a mechanical load applied on the component, a geometry of the component and material properties of the material of the component and a phase distribution (P(p,t)).

4. Method according to any of the claims 1 to 3, wherein the recurrent neural network is trained based on microstructural simulations, particularly using a crystal plasticity finite element method.

5. Method according to claim 4, wherein the recurrent neural network (12) is trained to determine the stress (σ(p,t)) and fatigue indicator parameter (FIP(p,t)) based on a given phase distribution (P(p,t)) and a deformation (ε(p,t)) at the respective integration point.

6. Method according to any of the claims 1 to 7, wherein the recurrent neural network (12) comprises a GRU network, an LSTM network a bidirectional neural network and/or a stacked neural network.

7. Method according to any of the claims 1 to 8, wherein the recurrent neural network (12) comprises a Bayesian recurrent neural network.

8. System for determining a distribution of a fatigue indicator parameter (FIP(p,t)) of a component after applying a load characteristics, the system is configured to perform the steps of the method according to any of the claims 1 to 7.

9. A computer program product comprising computer program code means, which is configured, when said program is loaded, to make the computer execute all steps of the method according to any of the claims 1 to 7.

10. A machine readable medium, having a program recorded thereon, where the program is to make the computer execute a method according to any of the claims 1 to 7.

## Patentansprüche

1. Computerimplementiertes Verfahren zum Bestimmen einer Verteilung eines Ermüdungsindikatorparameters (FIP(p, t)) einer Komponente nach dem Anwenden eines Lastkennlinienfelds, das die folgenden Schritte umfasst:
- Simulieren (S2) der Mikrostrukturantwort unter Verwendung einer Simulation auf der Makroebene, wobei ein Finite-Elemente-Verfahren in aufeinanderfolgenden Zeitschritten angewendet wird, wobei die Mikrostrukturantwort in einem wiederholten Ablauf des gleichzeitigen Bestimmens von Verformung (ε(p, t)) und Belastung (σ(p, t)) für jeden Integrationspunkt, bis die Simulation auf Makroebene zu einem ausgleichenden Gleichgewicht konvergiert ist, erhalten wird;
- für jede Iteration, jeden Zeitschritt und jeden Integrationspunkt Anwenden (S3) eines trainierten rückgekoppelten neuronalen Netzes (12) auf der Grundlage eines Inkrements der Verformung (ε(p, t)), um die Belastung (σ(p, t)) und einen Ermüdungsindikatorparameter (FIP(p, t)) zu erhalten, wobei das rückgekoppelte neuronale Netz konfiguriert ist, die Belastung (σ(p, t)) und den Ermüdungsindikatorparameter (FIP(p, t)) auf der Grundlage einer gegebenen Phasenverteilung (P(p, t)) und einer Verformung (ε(p, t)) am jeweiligen Integrationspunkt zu bestimmen, wobei
der Ermüdungsindikatorparameter (FIP(p, t)) von einem inneren Zustand des rückgekoppelten neuronalen Netzes (12) abgeleitet wird, wobei das Bestimmen der Belastung (σ(p, t)) und des Ermüdungsindikatorparameters (FIP(p, t)) an jedem der Integrationspunkte mittels des rückgekoppelten neuronalen Netzes (12) das Speichern und Verwenden eines inneren Zustands der Komponente für jede der spezifischen Positionen enthält, wobei das Bestimmen mindestens einer mechanischen Antwort mittels des rückgekoppelten neuronalen Netzes für eine Anzahl von Zeitschritten durchgeführt wird, wobei ein innerer Zustand des Materials zu einem spezifischen Zeitschritt gespeichert und in einem nachfolgenden Zeitschritt verwendet wird.

2. Verfahren nach Anspruch 1, wobei nach der Simulation der Mikrostrukturantworten die lokale Verteilung des Ermüdungsindikatorparameters (FIP(p, t)) verwendet wird, um den Spitzenlastpunkt des Maximums als einen Ort des Auslösens eines möglichen Ermüdungsrisses zu finden.

3. Verfahren nach Anspruch 1 oder 2, wobei das Simulieren der Mikrostrukturantwort auf der Grundlage einer mechanischen Last, die auf die Komponente aufgebracht wird, einer Geometrie der Komponente und von Materialeigenschaften des Materials der Komponente und einer Phasenverteilung (P(p, t)) durchgeführt wird.

4. Verfahren nach einem der Ansprüche 1 bis 3, wobei das rückgekoppelte neuronale Netz auf der Grundlage von Mikrostruktursimulationen, insbesondere unter Verwendung eines Finite-Elemente-Verfahrens für die Kristallplastizität, trainiert wird.

5. Verfahren nach Anspruch 4, wobei das rückgekoppelte neuronale Netz (12) trainiert wird, die Belastung (σ(p, t)) und den Ermüdungsindikatorparameter (FIP(p, t)) auf der Grundlage einer gegebenen Phasenverteilung (P(p, t)) und einer Verformung (ε(p, t)) am jeweiligen Integrationspunkt zu bestimmen.

6. Verfahren nach einem der Ansprüche 1 bis 7, wobei das rückgekoppelte neuronale Netz (12) ein GRU-Netz, ein LSTM-Netz, ein bidirektionales neuronales Netz und/oder ein geschichtetes neuronales Netz umfasst.

7. Verfahren nach einem der Ansprüche 1 bis 8, wobei das rückgekoppelte neuronale Netz (12) ein Bayessches rückgekoppeltes neuronales Netz umfasst.

8. System zum Bestimmen einer Verteilung eines Ermüdungsindikatorparameters (FIP(p, t)) einer Komponente nach dem Anwenden eines Lastkennlinienfelds, wobei das System konfiguriert ist, die Schritte des Verfahrens nach einem der Ansprüche 1 bis 7 durchzuführen.

9. Computerprogrammprodukt, das ein Computerprogrammcodemittel umfasst, das konfiguriert ist, dann, wenn das Programm geladen wird, zu bewirken, dass der Computer alle Schritte des Verfahrens nach einem der Ansprüche 1 bis 7 ausführt.

10. Maschinenlesbares Medium, auf dem ein Programm aufgezeichnet ist, wobei das Programm ausgelegt ist zu bewirken, dass der Computer ein Verfahren nach einem der Ansprüche 1 bis 7 ausführt.

## Revendications

1. Procédé, mis en œuvre par ordinateur, de détermination d'une distribution d'un paramètre indicateur de fatigue (FIP(p,t)) d'un composant après application d'une caractéristique de charge, comprenant les étapes suivantes :
- simulation (S2) de la réponse microstructurale à l'aide d'une simulation à l'échelle macroscopique appliquant une méthode des éléments finis par pas de temps consécutifs, la réponse microstructurale étant obtenue dans un processus récurrent de détermination simultanée d'une déformation (ε(p,t)) et d'une contrainte (σ(p,t)) pour chaque point d'intégration jusqu'à convergence de la simulation à l'échelle macroscopique vers un état stabilisé d'équilibre ;
- pour chaque itération, chaque pas de temps et chaque point d'intégration, application (S3) d'un réseau neuronal récurrent entraîné (12) sur la base d'un incrément de déformation (ε(p,t)) afin d'obtenir la contrainte (σ(p,t)) et le paramètre indicateur de fatigue (FIP(p,t)), le réseau neuronal récurrent étant configuré pour déterminer la contrainte (σ(p,t)) et le paramètre indicateur de fatigue (FIP(p,t)) sur la base d'une distribution de phase donnée (P(p,t)) et d'une déformation (ε(p,t)) au point d'intégration respectif,
le paramètre indicateur de fatigue (FIP(p,t)) étant dérivé d'un état interne du réseau neuronal récurrent (12), la détermination de la contrainte (σ(p,t)) et du paramètre indicateur de fatigue (FIP(p,t)) à chacun des points d'intégration au moyen du réseau neuronal récurrent (12) comprenant le stockage et l'utilisation d'un état interne du composant pour chacune des positions spécifiques, la détermination d'au moins une réponse mécanique au moyen du réseau neuronal récurrent étant réalisée sur un certain nombre de pas de temps, un état interne du matériau à un pas de temps spécifique étant stocké et utilisé à un pas de temps suivant.

2. Procédé selon la revendication 1, dans lequel, après simulation des réponses microstructurales, la distribution locale du paramètre indicateur de fatigue (FIP(p,t)) est utilisée pour identifier le point chaud maximal comme localisation potentielle d'initiation de fissure de fatigue.

3. Procédé selon la revendication 1 ou 2, dans lequel la simulation de la réponse microstructurale est réalisée sur la base d'une charge mécanique appliquée sur le composant, d'une géométrie du composant et de propriétés de matériau relatives au matériau du composant et d'une distribution de phase (P(p,t)).

4. Procédé selon l'une quelconque des revendications 1 à 3, dans lequel le réseau neuronal récurrent est entraîné sur la base de simulations microstructurales, en particulier à l'aide d'une méthode des éléments finis en plasticité cristalline.

5. Procédé selon la revendication 4, dans lequel le réseau neuronal récurrent (12) est entraîné afin de déterminer la contrainte (σ(p,t)) et le paramètre indicateur de fatigue (FIP(p,t)) sur la base d'une distribution de phase donnée (P(p,t)) et d'une déformation (ε(p,t)) au point d'intégration respectif.

6. Procédé selon l'une quelconque des revendications 1 à 7, dans lequel le réseau neuronal récurrent (12) comprend un réseau GRU, un réseau LSTM, un réseau neuronal bidirectionnel et/ou un réseau neuronal empilé.

7. Procédé selon l'une quelconque des revendications 1 à 8, dans lequel le réseau neuronal récurrent (12) comprend un réseau neuronal récurrent bayésien.

8. Système de détermination d'une distribution d'un paramètre indicateur de fatigue (FIP(p,t)) d'un composant après application d'une caractéristique de charge, le système étant configuré pour réaliser les étapes du procédé selon l'une quelconque des revendications 1 à 7.

9. Produit-programme d'ordinateur comprenant un moyen formant code de programme d'ordinateur qui est configuré, lorsque ledit programme est chargé, pour amener l'ordinateur à exécuter toutes les étapes du procédé selon l'une quelconque des revendications 1 à 7.

10. Support lisible par machine, sur lequel est enregistré un programme, le programme étant destiné à amener l'ordinateur à exécuter un procédé selon l'une quelconque des revendications 1 à 7.
